# EUROPÄISCHE PATENTSCHRIFT

(11) **EP 1 872 020 B1**
(45) Veröffentlichungstag und Bekanntmachung des Hinweises auf die Patenterteilung: **22.12.2010**
(21) Anmeldenummer: 06707099.5
(22) Anmeldetag: 21.02.2006
(51) Int. Cl.: F16B 13/14, F16B 13/06

(54) **DÜBEL ZUR VERANKERUNG IN VOLLBAUSTOFFEN**
DOWEL FOR FIXING IN SOLID BUILDING MATERIALS
CHEVILLE POUR ANCRAGE DANS DES MATERIAUX DE CONSTRUCTION EN DUR

(30) Priorität: 21.04.2005 DE 102005018485
(43) Veröffentlichungstag der Anmeldung: 02.01.2008
(73) Patentinhaber: fischerwerke GmbH & Co. KG, 72178 Waldachtal (DE)
(72) Erfinder: FISCHER, Rainer, 72178 Waldachtal (DE); HAUG, Willi, 72250 Freudenstadt-Musbach (DE)
(86) Internationale Anmeldenummer: PCT/EP2006/001519
(87) Internationale Veröffentlichungsnummer: WO 2006/111215

(56) Entgegenhaltungen:
- DE-A1- 3 610 655
- DE-B1- 1 575 171
- US-A- 4 740 123

## Beschreibung

Die Erfindung betrifft einen Dübel zur Verankerung in Vollbaustoffen, der durch Eindrehen einer Schraube aufweitbar ist.

Bekannte Kunststoffdübel zur Verankerung in Vollbaustoffen oder Hohlbaustoffen weisen einen hülsenförmigen Gewindeeingriffsbereich an ihrem vorderen Ende und einen Hohlschaft in ihrem hinteren Bereich auf, zwischen denen sich ein Spreizbereich befindet. Der Spreizbereich erstreckt sich über einen mittleren Bereich des Kunststoffdübels und weist Längsschlitze auf, durch die er in mehrere Spreizzungen unterteilt ist. Die Spreizzungen gehen an ihrem vorderen Ende in den Gewindeeingriffsbereich und an ihrem hinteren Ende in den Hohlschaft über. Zur Verankerung wird der Kunststoffdübel in ein Bohrloch gesteckt und es wird eine Spreizschraube in den Kunststoffdübel eingedreht. Die Spreizschraube durchdringt den Hohlschaft sowie den daran anschließenden Spreizbereich und schneidet ein Gewinde in den hülsenförmigen Gewindeeingriffsbereich. Im Bohrloch eines Vollbaustoffs drückt die Spreizschraube die Spreizzungen nach außen, wobei der Kunststoffdübel im Spreizbereich von der Spreizschraube aufgeweitet wird. Die Spreizzungen werden gegen eine Bohrlochwandung gedrückt, wodurch der Kunststoffdübel im Bohrloch des Vollbaustoffs verankert ist.

Wird der Kunststoffdübel bei einem Hohlbaustoff oder einer Platte durch ein Bohrloch gesteckt, befindet sich der Spreizbereich des Kunststoffdübels in einem Hohlraum hinter einem Steg des Hohlbaustoffes oder in einem Hohlraum hinter der Platte. Beim Eindrehen der Spreizschraube stützt ein Schraubenkopf der Spreizschraube den Hohlschaft des Kunststoffdübels axial ab und die Spreizschraube zieht den Gewindeeingriffsbereich des Kunststoffdübels in Richtung des Hohlschaftes. Der Spreizbereich des Dübels wird axial verkürzt. Zugleich verdreht sich der Gewindeeingriffsbereich des Dübels gegenüber dem Hohlschaft, die Spreizzungen wickeln sich umeinander, der Spreizbereich des Dübels bildet eine Art Knoten. Der Knoten hintergreift den Steg des Hohlbaustoffes bzw. die Platte und verankert den Dübel durch Formschluss.

Aus der Offenlegungsschrift DE 36 10 655 A1 ist ein Dübel zur Verankerung in Vollbaustoffen bekannt. Der Dübel ist durch Eindrehen einer Schraube aufweitbar und umfasst einen Gewindeeingriffsbereich, der mit einem Gewinde einer eingedrehten Schraube in Eingriff steht, einen Spreizbereich, der von einem Schaftabschnitt einer eingedrehten Schraube nach außen gedrückt und aufgeweitet wird und einen Stauchbereich, der sich zwischen dem Gewindebereich und dem Spreizbereich befindet.

Der Erfindung liegt die Aufgabe zugrunde, einen Dübel vorzuschlagen, der einstückig durch Spritzgießen aus Kunststoff herstellbar ist und eine hohe Verankerungskraft in Vollbaustoffen aufweist.

Diese Aufgabe wird erfindungsgemäß durch einen Dübel mit den Merkmalen des Anspruchs 1 gelöst. Weitere vorteilhafte Ausgestaltungen sind den Unteransprüchen zu entnehmen.

Der erfindungsgemäße Dübel ist zur Verankerung in Vollbaustoffen vorgesehen und weist einen zwischen einem Spreizbereich und einem Gewündeeingriffsbereich angeordneten Stauchbereich auf Erfindungsgemäß weist der Stauchbereich V-förmige Schlitze mit Spreizzungen auf. Der Gewindeeingriffsbereich ist an einem vorderen Ende des Dübels angeordnet und steht mit einem Gewinde einer Schraube in Eingriff, die den Dübel durch Eindrehen der Schraube aufweitet. Der Spreizbereich des Dübels wird von einem Schaftabschnitt der eingedrehten Schraube nach außen gegen eine Wandung eines Bohrloches gedrückt, d. h. aufgespreizt, wodurch der Dübel im Bohrloch fixiert ist, bis der Stauchbereich durch Anziehen der Schraube gestaucht wird. Der Stauchbereich des Dübels wird beim Eindrehen der Schraube gestaucht, indem der Gewindeeingriffsbereich durch Drehen der Schraube in Richtung des Spreizbereiches bewegt wird. Das Gewinde der Schraube und der Gewindeeingriffsbereich des Dübels bilden eine Art Bewegungsgewinde. Durch die Bewegung des Gewindeeingriffsbereiches zum Spreizbereich wird der Stauchbereich des Dübels axial verkürzt (gestaucht), wodurch eine Wandung des Stauchbereiches nach außen verdrängt wird. Die Wandung des Stauchbereiches wird dabei geknautscht, wobei das Material der Wandung ineinander geschoben, verdichtet und nach außen gedrückt bzw. verdrängt wird. Vorteilhafterweise wird der Stauchbereich beim Stauchen plastisch verformt. Durch die plastische Verformung passt sich der Dübel gut an das Bohrloch an, wodurch hohe Haltekräfte bei der Verankerung des Dübels erzielt werden. Vorteilhafterweise weist der Stauchbereich des Dübels in Umfangsrichtung verlaufende Quernuten auf, Zweckmäßigerweise sind die Quernuten und die V-förmigen Schlitze in Gruppen angeordnet, die sich in Längsrichtung des Stauchbereiches erstrecken. Die Gruppen sind über die Umfangsrichtung des Stauchbereiches verteilt, wobei auf eine Gruppe von Quernuten jeweils eine Gruppe von V-förmigen Schlitzen folgt. Die Schwächung der Wandung des Stauchbereiches im Bereich der Nuten und der Schlitze ermöglicht ein definiertes Knautschen des Stauchbereiches beim Stauchen des Dübels und hat zudem den Vorteil, dass ein Kraftaufwand zum Stauchen verringert ist. Erfindungsgemäß wird das Material der Wandung im Stauchbereich beim Stauchen des Dübels derart nach außen verdrängt, dass die durch die V-förmigen Schlitze gebildeten Spreizzungen schuppenartig übereinander geschoben werden. Die Nuten und/oder die Schlitze erleichtern ein Verdrängen des Materials des Dübels nach außen und ein Plastifizieren beim Aufspreizen des Dübels und Stauchen des Stauchbereichs. Beides erhöht die Verankerungskraft des Dübels.

In einer bevorzugten Ausführungsform ist der Dübel hülsenförmig gestaltet und besteht aus Kunststoff. Dies hat den Vorteil, dass der Dübel einstückig und damit kostengünstig durch Spritzgießen herstellbar ist. Es ist jedoch auch möglich, andere Querschnittsformen und andere Materialien vorzusehen, oder den Dübel mehrstückig auszuführen.

In einer weiteren vorteilhaften Ausgestaltung der Erfindung weist der Spreizbereich des Dübels in Längsrichtung verlaufende Schlitze auf, die den Spreizbereich in Spreizzungen unterteilen. Zweckmäßigerweise weisen die Spreizzungen in einem mittleren Bereich eine Verdickung auf, wodurch die Spreizzungen etwas nach außen gewölbt sind. Beim Einbringen des Dübels in ein Bohrloch werden die Spreizzungen radial nach innen gedrückt und anschließend beim Eindrehen der Schraube durch einen gewindelosen Schaftabschnitt der Schraube nach außen gegen die Wand des Bohrloches gepresst. Der Spreizbereich wird aufgespreizt und dadurch im Bohrloch verankert.

Vorteilhafterweise ist der Gewindeeingriffsbereich an einem in Einbringrichtung vorderen Ende des Dübels angeordnet, derart dass beim Eindrehen der Schraube in den Dübel der Spreizbereich aufgeweitet wird, bevor das Gewinde der Schraube mit dem Gewindeeingriffsbereich in Eingriff kommt und der Stauchbereich gestaucht wird. Das Anpressen der Spreizzungen an die Wand des Bohrloches bewirkt eine Verankerung und eine Drehsicherung des Dübels im Bohrloch bis der Stauchbereich gestaucht wird.

Eine vorteilhafte Weiterbildung der Erfindung sieht vor, dass der Gewindeeingriffsbereich des Dübels in Steigungsrichtung des Gewindes einer Schraube verlaufende Schlitze aufweist. Das Gewinde der Schraube steht mit den in Steigungsrichtung des Gewindes verlaufenden Schlitzen des Gewindeeingriffsbereichs in Eingriff, wobei das Gewinde der Schraube und der Gewindeeingriffsbereich beim Drehen der Schraube nach Art eines Bewegungsgewindes wirken. Dies hat den Vorteil, dass nur ein geringer Kraftaufwand zum Eindrehen der Schraube erforderlich ist und zugleich ein hohes Anzugsmoment bei der Verankerung des Dübels erreicht wird. Die Schlitze können in den Stauchbereich des Dübels fortgesetzt angeordnet sein.

Zwischen einem in Einbringrichtung hinteren Ende und dem Spreizbereich weist der Dübel bei einer Ausgestaltung der Erfindung Dehn- oder Stauchfugen auf. Das hintere Ende des Dübels befindet sich auf einer dem Stauchbereich und dem Gewindeeingriffsbereich abgewandten Seite des Spreizbereichs, durch das hintere Ende wird die Schraube in den Dübel eingedreht. Die Dehn- oder Stauchfugen sind Materialschwächungen beispielsweise in Form von Nuten oder Schlitzen, die eine axiale Verlängerung oder Verkürzung des Dübels ermöglichen. Der Dübel behindert dadurch nicht das Eindrehen der Schraube, wenn diese mit ihrem Kopf auf dem hinteren Ende des Dübels aufsitzt und der Dübel kann sich dehnen, wenn er mit einem Bund auf einem Verankerungsgrund oder einem zu befestigenden Bauteil aufsitzt.

Die mit dem Dübel eine Kombination bildende Schraube weist bei einer weiteren vorteilhaften Ausgestaltung der Erfindung ein Gewinde und einen gewindelosen Schaftabschnitt auf. Bei eingedrehter Schraube durchsetzt der gewindelose Schaftabschnitt den Spreizbereich sowie den Stauchbereich des Dübels, wobei das Gewinde mit dem Gewindeeingriffsbereich in Eingriff steht. Zweckmäßigerweise weist der Dübel im Gewindeeingriffsbereich einen kleineren Innendurchmesser als im Spreiz- und im Stauchbereich auf. Dies hat den Vorteil, dass der Spreizbereich und der Stauchbereich axial auf der Schraube verschieblich sind, wodurch die Stauchung des Stauchbereiches ermöglicht wird.

Ein Übergang vom gewindelosen Schaftabschnitt zum Gewinde der Schraube der Kombination ist vorzugsweise scharfkantig. Dadurch ergibt sich beim Eindrehen der Schraube in den Dübel eine Kraftübertragung in axialer Richtung, die die Stauchung des Stauchbereichs des Dübels unterstützt.

Nachfolgend wird die Erfindung anhand eines in der Zeichnung dargestellten Ausführungsbeispiels näher erläutert.

Es zeigen:
- Figur 1: eine perspektivische Ansicht eines erfindungsgemäßen Dübels mit Schraube;

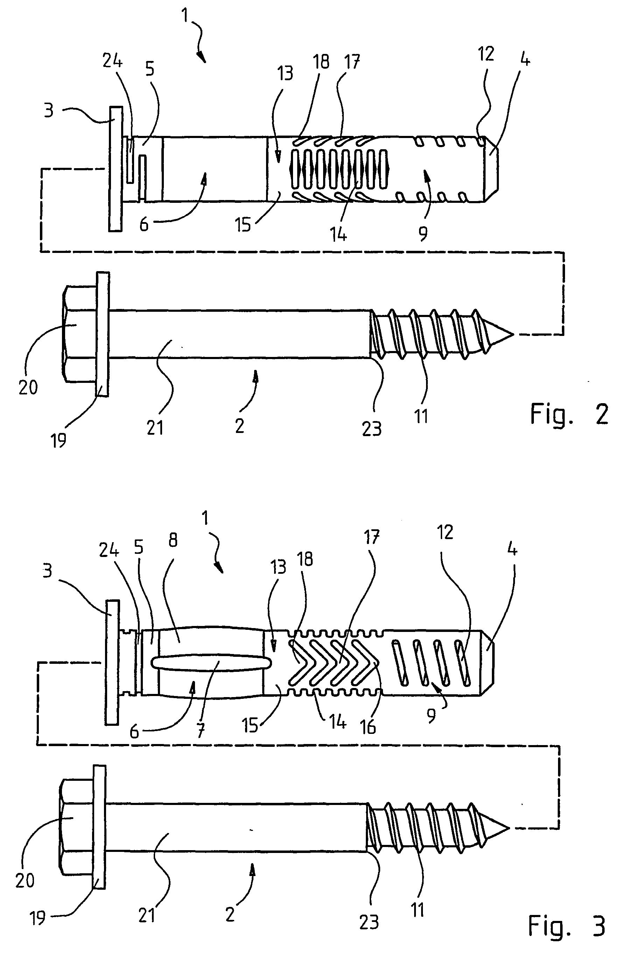

- Figur 2: eine Seitenansicht des erfindungsgemäßen Dübels aus Figur 1;
- Figur 3: eine weitere Seitenansicht des erfindungsgemäßen Dübels aus Figur 1 mit einer gegenüber der Figur 2 um 90° in Umfangsrichtung veränderter Blickrichtung;
- Figur 4: einen Achsschnitt des Dübels aus Figur 2;
- Figur 5: einen Achsschnitt des Dübels aus Figur 3; und
- Figur 6: eine Seitenansicht des Dübels aus Figur 2 nach dem Eindrehen der Schraube.

Der in der Zeichnung dargestellte erfindungsgemäße Dübel 1 ist im Wesentlichen hülsenförmig und durch Eindrehen einer Schraube 2 aufweitbar. Der Dübel 1 ist aus Kunststoff hergestellt und weist an seinem hinteren Ende einen Radialbund 3 auf, sein vorderes Ende weist eine Fase 4 mit einem Winkel von 45° auf. In einem hinteren Bereich, der ungefähr ein Zehntel der Länge des Dübels 1 einnimmt, weist der Dübel 1 einen zylindrischen Hohlschaft 5 auf. Der Hohlschaft 5 weist Dehn- und Stauchfugen 24 auf, die als Materialschwächungen in Form von Nuten oder Schlitzen ausgebildet sind. Die Dehn- und Stauchfugen 24 ermöglichen eine Längenanpassung des Dübels 1 beim Eindrehen und Festziehen der Schraube 2. Ein auf den Hohlschaft 5 folgender Spreizbereich 6 nimmt ungefähr ein Drittel der Länge des Dübels 1 ein. Im Spreizbereich 6 sind durch Längsschlitze 7 zwei Spreizzungen 8 einander gegenüberliegend ausgebildet, die eine Verdickung 22 in ihrem mittleren Bereich aufweisen und etwas nach außen gewölbt sind. Beim Einbringen des Dübels 1 in ein nicht dargestelltes Bohrloch werden die Spreizzungen 8 wegen ihrer Verdickungen 22 radial nach innen gedrückt. In einem vorderen Bereich, der in der Länge in etwa dem Spreizbereich 6 entspricht, weist der Dübel einen hülsenförmigen Gewindeeingriffsbereich 9 mit einem Austrittsloch 10 für einen Austritt der Schraube 2 aus dem vorderen Ende des Dübels 1 auf. Der Gewindeeingriffsbereich 9 weist in Steigrichtung eines Gewindes 11 der Schraube 2 verlaufende Schlitze 12 auf.

Zwischen dem Spreizbereich 6 und dem Gewindeeingriffsbereich 9 des Dübels 1 ist ein Stauchbereich 13 angeordnet. Der Stauchbereich 13 wird beim Eindrehen der Schraube 2 in den Gewindeeingriffsbereich 9 gestaucht, indem sich der Gewindeeingriffsbereich 9 durch Eindrehen der Schraube 2 zum Spreizbereich 6 hin bewegt und dadurch den Stauchbereich 13 axial verkürzt. Der Stauchbereich 13 weist in Umfangsrichtung des Dübels 1 verlaufende Quernuten 14 auf, die eine Schwächung einer Wandung 15 des Stauchbereichs 13 bewirken. Der Stauchbereich 13 weist außerdem in Umfangsrichtung zu den Quernuten 14 um 90° versetzte, V-förmige Schlitze 16 auf. Die V-förmigen Schlitze 16 durchbrechen die Wandung 15 des Stauchbereichs 13, wodurch V-förmige Spreizzungen 17 gebildet sind. Spitzen 18 der Spreizzungen 17 weisen zum vorderen Ende des Dübels 1 in Richtung des Austrittsloches 10.

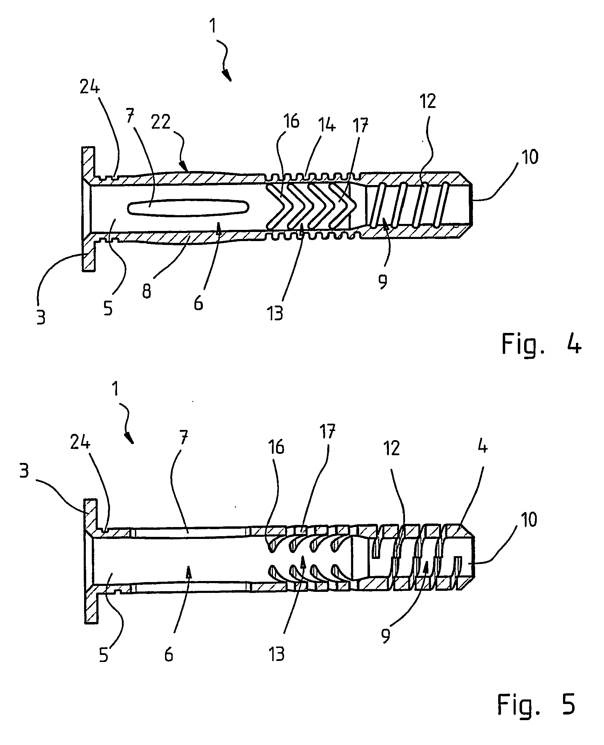

Die Schraube 2 des Dübels 1 weist einen Schraubenbund 19 und einen Sechskantkopf 20 auf. Ein gewindeloser Schaftabschnitt 21 der Schraube 2 ist zwischen dem Gewinde 11 und dem Schraubenbund 19 angeordnet. Ein Durchmesser des Schaftabschnittes 21 der Schraube 2 ist geringfügig kleiner als der Innendurchmesser des zylindrischen Hohlschaftes 5 des Dübels 1. Wie in Figuren 4, 5 zu sehen weist der Dübel 1 im Gewindeeingriffsbereich 9 einen kleineren Innendurchmesser als im Hohlschaft 5, im Spreizbereich 6 und im Stauchbereich 13 auf. Dadurch steht das Gewinde 11 der Schraube 2 mit dem Gewindeeingriffsbereich 9 in Eingriff, wogegen der Spreizbereich 6 und der Stauchbereich 13 axial auf der Schraube 2 verschieblich sind.

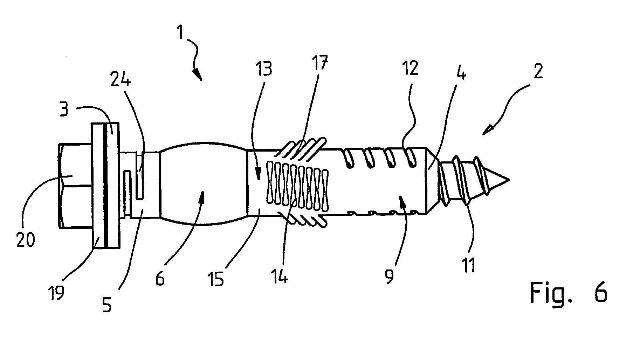

Die Figur 6 zeigt den Dübel 1 mit eingedrehter Schraube 2. Die Schraube 2 ist, vollständig in den Dübel 1 eingedreht und stützt sich mit dem Schraubenbund 19 am Radialbund 3 des Dübels 1 ab. Der gewindelose Schaftabschnitt 21 der Schraube 2 durchsetzt den Hohlschaft 5, den Spreizbereich 6 und den Stauchbereich 13 des Dübels 1. Das Gewinde 11 der Schraube 2 durchsetzt den Gewindeeingriffsbereich 9 und tritt aus dem Austrittsloch 10 des Gewindeeingriffsbereichs 9 aus. Das Gewinde 11 der Schraube 2 steht mit den in Steigungsrichtung des Gewindes 11 verlaufenden Schlitzen 12 des Gewindeeingriffsbereichs 9 in Eingriff. Diese Ausführung ermöglicht einen geringen Kraftaufwand beim Eindrehen der Schraube 2 in den Dübel 1 und zugleich ein hohes Anzugsmoment bei der Verankerung des Dübels 1 im Bohrloch. Der Spreizbereich 6 des Dübels 1 ist vom gewindelosen Schaftabschnitt 21 der eingedrehten Schraube 2 nach außen gedrückt und aufgeweitet. Die Spreizzungen 8 werden vom Schaftabschnitt 21 gegen die Wand des nicht dargestellten Bohrloches gepresst. Um den Anpressdruck zu erhöhen, weisen die Spreizzungen 8 in ihrem mittleren Bereich die Verdickungen 22 auf, die in Figur 4 zu sehen sind. Beim Eindrehen der Schraube 2 in den Dübel 1 wird der Spreizbereich 6 aufgeweitet, bevor das Gewinde 1 der Schraube 2 mit dem Gewindeeingriffsbereich 9 in Eingriff kommt. Das Anpressen der Spreizzungen 8 an die Wand des Bohrloches bewirkt eine Verankerung und eine Drehsicherung des Dübels 1 im Bohrloch.

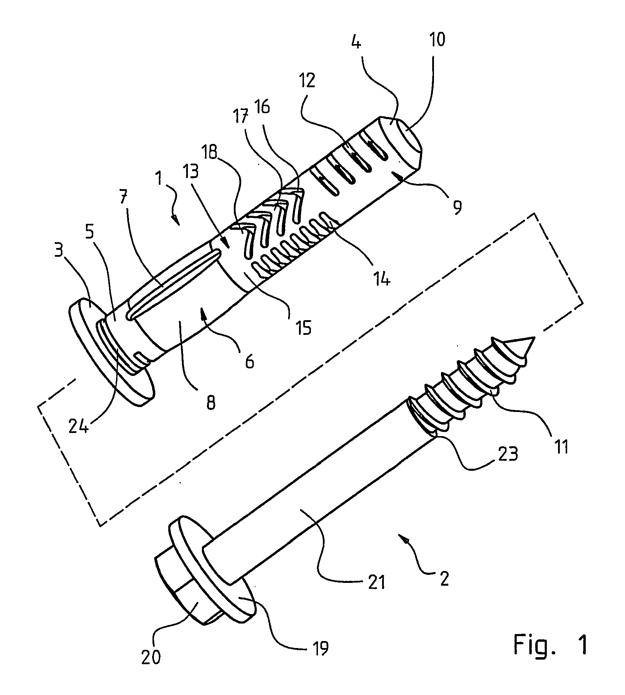

Beim weiteren Eindrehen der Schraube 2 in den Dübel 1 kommt das Gewinde 11 der Schraube 2 in Eingriff mit dem Gewindeeingriffsbereich 9 des Dübels 1. Das Gewinde 11 der Schraube 2 und die Schlitze 12 des Gewindeeingriffsbereichs 9 wirken nach Art eines Bewegungsgewindes. Beim Weiterdrehen der Schraube 2 wird der Gewindeeingriffsbereich 9 in Richtung des hinteren Endes des Dübels 1 mit dem Radialbund 3 gezogen, wobei das Gewinde 11 der Schraube 2 aus dem Austrittsloch 10 des Dübels 1 austritt. Der Stauchbereich 13 des Dübels 1 wird axial verkürzt und eine axiale Länge des Dübels 1 ist gegenüber dem nicht verankerten Dübel 1, wie in der Figur 1 dargestellt, verkürzt. Die Verkürzung beruht auf der Stauchung des Stauchbereichs 3 beim Eindrehen der Schraube 2.

Durch die Stauchung des Stauchbereiches 13 wird eine Wandung 15 des Stauchbereiches 13 nach außen gedrängt. Das Kunststoffmaterial der Wandung 15 des Dübels 1 ist im Stauchbereich 13 elastisch/plastisch verformt, wobei das Material ineinander geschoben, verdichtet und nach außen verdrängt ist. Durch die Plastifizierung passt sich der Dübel 1 dem Bohrloch gut an und es werden hohe Haltekräfte bei der Verankerung des Dübels 1 erzielt.

Ein Übergang 23 vom gewindelosen Schaftabschnitt 21 zum Gewinde 11 der Schraube 2 ist scharfkantig. Dadurch findet beim Eindrehen der Schraube 2 in den Dübel 1 eine axiale Kraftübertragung statt, die das Stauchen und teilweise Plastifizieren des Stauchbereichs 13 unterstützt.

Die Quernuten 14 und die V-förmigen Schlitze 16 des Stauchbereiches 13 sind in axialer Richtung ebenfalls gestaucht, wodurch Wandungen der Quernuten 14 und der V-förmigen Schlitze 16 ganz oder teilweise aneinander anliegen. Die V-förmigen Spreizzungen 17 liegen schuppenartig übereinander, wobei die Spitzen 18 der Spreizzungen 17 seitlich vom Dübel 1 abstehen und den Dübel 1 mit einem hintergriffartigen Formschluss im Bohrloch verankern.

## Patentansprüche

1. Dübel zur Verankerung in Vollbaustoffen, der durch Eindrehen einer Schraube (2) aufweitbar ist, mit einem Gewindeeingriffsbereich (9), der mit einem Gewinde (11) einer eingedrehten Schraube (2) in Eingriff steht, mit einem Spreizbereich (6), der von einem Schaftabschnitt (21) einer eingedrehten Schraube (2) nach außen gedrückt und aufgeweitet wird, und mit einem Stauchbereich (13), der sich zwischen dem Gewindeeingriffsbereich (9) und dem Spreizbereich (6) befindet,
**dadurch gekennzeichnet,**
**dass** der Stauchbereich (13) V-förmige Schlitze (16) aufweist, und
**dass** der Stauchbereich (13) beim Eindrehen einer Schraube (2) in den Gewindeeingriffsbereich (9) gestaucht wird, indem sich der Gewindeeingriffsbereich (9) durch Drehen der Schraube (2) zum Spreizbereich (6) derart bewegt, dass das Material einer Wandung im Stauchbereich (13) ineinander geschoben und nach außen verdrängt wird, derart, dass durch die V-förmigen Schlitze (16) gebildeten Spreizzungen (17) schuppenartig übereinander geschoben werden, wodurch der Stauchbereich (13) sich axial verkürzt.

2. Dübel nach Anspruch 1, **dadurch gekennzeichnet, dass** der Gewindeeingriffsbereich (9) an einem in Einbringrichtung vorderen Ende des Dübels (1) angeordnet ist, derart, dass sich beim Eindrehen einer Schraube (2) der Spreizbereich (6) früher aufweitet als der Stauchbereich (13) gestaucht wird.

3. Dübel nach Anspruch 1, **dadurch gekennzeichnet, dass** der Stauchbereich (13) beim Stauchen plastisch verformt wird.

4. Dübel nach Anspruch 1, **dadurch gekennzeichnet, dass** der Dübel (1) hülsenförmig ist.

5. Dübel nach Anspruch 1, **dadurch gekennzeichnet, dass** der Gewindeeingriffsbereich (9) in Steigungsrichtung des Gewindes (11) der Schraube (2) verlaufende Schlitze (12) aufweist.

6. Dübel nach Anspruch 1, **dadurch gekennzeichnet, dass** der Stauchbereich (13) in Umfangsrichtung verlaufende Quernuten (14) aufweist.

7. Dübel nach Anspruch 1, **dadurch gekennzeichnet, dass** der Spreizbereich (6) in Längsrichtung verlaufende Schlitze (7) aufweist.

8. Dübel nach Anspruch 1, **dadurch gekennzeichnet, dass** der Spreizbereich (6) Spreizzungen (8) aufweist, die in einem mittleren Bereich eine Verdickung (22) aufweisen.

9. Dübel nach Anspruch 1, **dadurch gekennzeichnet, dass** der Dübel (1) Dehn- und Stauchfugen (24) zwischen einem in Einbringrichtung hinteren Ende des Dübels (1) und dem Spreizbereich (6) aufweist.

10. Dübel nach Anspruch 1, **dadurch gekennzeichnet, dass** der Dübel (1) aus Kunststoff besteht.

11. Kombination eines Dübels nach einem der Ansprüche 1 bis 10 mit einer Schraube (2) mit einem Gewinde (11) und mit einem gewindelosen Schaftabschnitt (21), **dadurch gekennzeichnet, dass** nach dem Eindrehen der Schraube (2) der gewindelose Schaftabschnitt (21) den Spreizbereich (6) und den Stauchbereich (13) durchsetzt und das Gewinde (11) mit dem Gewindeeingriffsbereich (9) des Dübels (1) in Eingriff steht.

12. Kombination nach Anspruch 11, **dadurch gekennzeichnet, dass** die Schraube (2) einen scharfkantigen Übergang (23) vom gewindelosen Schaftabschnitt (21) zum Gewinde (11) aufweist.

## Claims

1. Fixing plug for anchoring in solid building materials, which fixing plug is expansible by screwing in a screw (2), having a thread engagement zone (9) which is in engagement with a thread (11) of a screwed-in screw (2), having an expansion zone (6) which is pressed outwards and expanded by a shank portion (21) of a screwed-in screw (2), and having a compressible zone (13) which is located between the thread engagement zone (9) and the expansion zone (6),
**characterized in that**
the compressible zone (13) has V-shaped slots (16), and
the compressible zone (13) is compressed when a screw (2) is screwed into the thread engagement zone (9), the thread engagement zone (9) being moved towards the expansion zone (6) by the turning of the screw (2) in such a way that the material of a wall in the compressible zone (13) is pushed into itself and displaced outwards in such a way that expansion tongues (17) formed by the V-shaped slots (16) are pushed one over the other like scales, so that the compressible zone (13) is axially shortened.

2. Fixing plug according to claim 1, **characterized in that** the thread engagement zone (9) is arranged at the front end of the fixing plug (1) viewed in the direction of insertion in such a way that, when a screw (2) is screwed in, expansion of the expansion zone (6) takes place earlier than compression of the compressible zone (13).

3. Fixing plug according to claim 1, **characterized in that** the compressible zone (13), on being compressed, is plastically deformed.

4. Fixing plug according to claim 1, **characterized in that** the fixing plug (1) is sleeve-like.

5. Fixing plug according to claim 1, **characterized in that** the thread engagement zone (9) has slots (12) running in the pitch direction of the thread (11) of the screw (2).

6. Fixing plug according to claim 1, **characterized in that** the compressible zone (13) has transverse grooves (14) running in the circumferential direction.

7. Fixing plug according to claim 1, **characterized in that** the expansion zone (6) has slots (7) running in the longitudinal direction.

8. Fixing plug according to claim 1, **characterized in that** the expansion zone (6) has expansion tongues (8) which have a thickened portion (22) in a central region.

9. Fixing plug according to claim 1, **characterized in that** the fixing plug (1) has expansion and compression joints (24) between the rear end of the fixing plug (1) viewed in the direction of insertion and the expansion zone (6).

10. Fixing plug according to claim 1, **characterized in that** the fixing plug (1) is made of plastics material.

11. Combination of a fixing plug according to any one of claims 1 to 10 with a screw (2) having a thread (11) and having an unthreaded shank portion (21), **characterized in that**, after the screw (2) has been screwed in, the unthreaded shank portion (21) extends through the expansion zone (6) and the compressible zone (13), and the thread (11) is in engagement with the thread engagement zone (9) of the fixing plug (1).

12. Combination according to claim 11, **characterized in that** the screw (2) has a sharp-edged transition (23) from the unthreaded shank portion (21) to the thread (11).

## Revendications

1. Cheville destinée à l'ancrage dans des matériaux de construction en dur, pouvant être déployée par enfoncement d'une vis (2) et comprenant une zone (9) de coopération par filetage, en prise avec un filetage (11) d'une vis (2) insérée ; une zone d'expansion (6), poussée vers l'extérieur et évasée sous l'action d'un tronçon (21) formant tige d'une vis (2) insérée ; et une zone de refoulement (13) interposée entre ladite zone (9) de coopération par filetage et ladite zone d'expansion (6),
**caractérisée par le fait**
**que** la zone de refoulement (13) présente des fentes (16) configurées en V ; et
**que** ladite zone de refoulement (13) est refoulée lors de l'enfoncement d'une vis (2) dans la zone (9) de coopération par filetage, du fait qu'une rotation imposée à ladite vis (2) a pour effet d'imprimer à ladite zone (9) de coopération par filetage, vers la zone d'expansion (6), un mouvement par lequel le matériau d'une paroi est resserré et repoussé vers l'extérieur, dans ladite zone de refoulement (13), de telle sorte que des languettes déployables (17), formées par lesdites fentes (16) configurées en V, soient amenées en superposition à la manière d'écailles, entraînant ainsi un raccourcissement axial de ladite zone de refoulement (13).

2. Cheville selon la revendication 1, **caractérisée par le fait que** la zone (9) de coopération par filetage est disposée à une extrémité de ladite cheville (1) qui est située à l'avant dans la direction d'introduction, de telle sorte que l'évasement de la zone d'expansion (6) s'opère plus tôt que le refoulement de la zone de refoulement (13) lors de l'insertion d'une vis (2).

3. Cheville selon la revendication 1, **caractérisée par le fait que** la zone de refoulement (13) subit une déformation plastique au stade du refoulement.

4. Cheville selon la revendication 1, **caractérisée par le fait que** ladite cheville (1) revêt la forme d'une douille.

5. Cheville selon la revendication 1, **caractérisée par le fait que** zone (9) de coopération par filetage comporte des fentes (12) s'étendant dans la direction du pas du filetage (11) de la vis (2).

6. Cheville selon la revendication 1, **caractérisée par le fait que** la zone de refoulement (13) offre des rainures transversales (14) s'étendant dans le sens périphérique.

7. Cheville selon la revendication 1, **caractérisée par le fait que** la zone d'expansion (6) présente des fentes (7) s'étendant dans la direction longitudinale.

8. Cheville selon la revendication 1, **caractérisée par le fait que** la zone d'expansion (6) possède des languettes déployables (8) munies d'un renflement (22) dans une région médiane.

9. Cheville selon la revendication 1, **caractérisée par le fait que** ladite cheville (1) comporte des interstices (24) d'allongement et de retrait entre la zone d'expansion (6) et une extrémité de ladite cheville (1) qui est située à l'arrière dans la direction d'introduction.

10. Cheville selon la revendication 1, **caractérisée par le fait que** ladite cheville (1) consiste en une matière plastique.

11. Combinaison d'une cheville selon l'une des revendications 1 à 10, avec une vis (2) munie d'un filetage (11) et d'un tronçon (21) formant tige, dépourvu de filetage, **caractérisée par le fait que**, après l'enfoncement de la vis (2), le tronçon (21) formant tige, dépourvu de filetage, traverse la zone d'expansion (6) et la zone de refoulement (13), et le filetage (11) est en prise avec la zone (9) de ladite cheville (1) qui est dévolue à une coopération par filetage.

12. Combinaison selon la revendication 11, **caractérisée par le fait que** la vis (2) présente une transition (23) à arête vive entre le tronçon (21) formant tige, dépourvu de filetage, et le filetage (11).
